# EUROPÄISCHE PATENTSCHRIFT

(11) **EP 3 034 276 B1**
(45) Veröffentlichungstag und Bekanntmachung des Hinweises auf die Patenterteilung: **30.06.2021**
(21) Anmeldenummer: 14004302.7
(22) Anmeldetag: 19.12.2014
(51) Int. Cl.: B29C 65/00, B29C 65/06, B29C 65/14, B29C 65/72, B29C 65/02

(54) **Bauteil mit stoffschlüssiger Verbindung und ein Fügeverfahren**
Component with firmly bonded connection and a joining method
Composant ayant une connexion par liaison de matière et procédé de jointure

(43) Veröffentlichungstag der Anmeldung: 22.06.2016
(73) Patentinhaber: Airbus Defence and Space GmbH, 85521 Ottobrunn (DE)
(72) Erfinder: Silvanus, Jürgen, 82008 Unterhaching (DE); Meyer, Dr. Meinhard, 81739 München (DE); Jürgens, Michael, 80797 München (DE)
(74) Vertreter: Isarpatent

(56) Entgegenhaltungen:
- EP-A1- 1 941 987
- JP-A- H04 135 720
- JP-A- 2003 145 625
- JP-A- 2012 232 453
- AHMADI H ET AL: "Influence of Pin Profile on Quality of Friction Stir Lap Welds in Carbon Fiber Reinforced Polypropylene Composite", INTERNATIONAL JOURNAL OF MECHANICS AND APPLICATIONS,, Bd. 2, Nr. 3, 1. Januar 2012 (2012-01-01), Seiten 24-28, XP009162832, ISSN: 2165-9281

## Beschreibung

Die Erfindung betrifft ein Fügeverfahren für ein Bauteil mit zumindest zwei Kunststoffkomponenten, die miteinander verbunden werden In unterschiedlichen industriellen Anwendungsgebieten ist es eine wiederkehrende Aufgabe unterschiedliche Kunststoffkomponenten miteinander zu verbinden. Dabei kommen bevorzugt Klebeverfahren und Schweißverfahren zum Einsatz. Bei faserverstärkten Kunststoffen ergibt sich häufig der Fall, dass in dem Verbindungsbereich, also dem Bereich, wo die Klebe- oder Schweißfläche ist, keine Faserverstärkung vorhanden ist. Die Festigkeit des faserverstärkten Kunststoffs ergibt sich aus der Kombination von dem Matrix-Kunststoff und den darin eingebetteten Fasern. Aufgrund der fehlenden Fasern in dem Verbindungsbereich hat ein verschweißtes Bauteil dort eine reduzierte Tragfähigkeit, insbesondere Zugfestigkeit. Um dieses Problem zu reduzieren, werden herkömmlich die Verklebungen großflächiger ausgelegt oder ergänzende Sicherungsmittel, wie z.B. "Angstnieten" verwendet. Nieten werden als Angstnieten bezeichnet, wenn sie bei einer ausreichend stabilen Klebung eigentlich nicht notwendig wären, bei der die Verbindungsfestigkeit einer Verklebung der Festigkeit des Grundmaterials entspricht.

WO2011069899A2 offenbart ein Fügeverfahren, bei dem ein Blech in der Verbindungszone integriert ist und vorstehende Abschnitte oder Verankerungspins greifen zu beiden Seiten in den benachbarten Kunststoff, um so eine Verzahnung zu erhalten, die die Verbindung der verklebten oder verschweißten Oberflächen verbessert.

Des Weiteren ist in der JP 2003 145625 A ein Verfahren zum Verbinden von thermoplastischen Harzteilen beschrieben.

Die JP H04 135720 A beschreibt ein Verfahren zur Herstellung von faserverstärkten Harzformteilen.

Die JP 2012 232453 A bezieht sich auf eine Verbindungsmethode und eine Verbindungsstruktur zum Verbinden von zwei oder mehr überlappenden Teilen aus faserverstärkten Harzmaterialien.

In der EP 1 941 987 A1 ist ein Rührreibschweißverfahren von faserverstärkten Thermoplasten beschrieben.

Außerdem ist in dem Auszug aus International Journal of Mechanics and Applications. Band. 2, Nr. 3, 1. Januar 2012, Seiten 24-28 - Ahmadi H. et.al "Influence of Pin Profile on Quality of Friction Stir Lap Welds in Carbon Fiber Reinforced Polypropylene Composite" der Einfluss eines Pin-Profils auf die Qualtität einer Rührreibschweiß-Überlappungsverbindung bei einem kohlefaserverstärkten Polypropylene-Komposit beschrieben.

Es ist die Aufgabe der Erfindung ein verbessertes Fügeverfahren von Kunststoffteilen bereitzustellen, wobei zumindest eines der Kunststoffteile faserverstärkt ist. Hierbei soll die Tragfähigkeit des Verbindungsbereichs erhöht werden und möglichst keine Schwächung der allgemeinen Materialfestigkeit darstellen.

Diese Aufgabe wird mit den Schweißverfahren des Anspruchs 1 gelöst. Vorteilhafte Ausführungsformen ergeben sich aus den abhängigen Ansprüchen.

Bei einem Schweißverfahren zur Erzeugung einer stoffschlüssigen Verbindung von einem ersten und einem zweiten Kunststoffteil in einem Verbindungsbereich ist zumindest das erste Kunststoffteil mit einer Mehrzahl gerichteter Fasern faserverstärkt, und ein Schweißkopf wird in Kontakt zu dem ersten Kunststoffteil gebracht und im Verbindungsbereich wird eine Erweichung und/oder ein Schmelzen des Kunststoffs bewirkt, so dass der Schweißkopf in das erste Kunststoffteil eindringen kann. Der Verbindungsbereich liegt insbesondere benachbart zu einem Ende des ersten Kunststoffteils, so dass sich Verstärkungsfasern über eine entsprechende Erwärmung vom genannten Ende in den Verbindungsbereich ziehen können. Alternativ oder zudem wird das benachbart zu dem Verbindungsbereich befindliche Kunststoffmaterial erwärmt, dass sich Verstärkungsfasern auch außerhalb des Verbindungsbereichs umorientieren können, um es dem Schweißkopf zu erlauben auch ohne ein generelles Brechen oder Reißen der Verstärkungsfasern in das erste Kunststoffteil einzudringen. Herkömmlich war v.a. das Verschweißen über ein Reibschweißen mit faserverstärkten Kunststoffen dann möglich, wenn die Fasern kurz waren, mit einer Länge von kleiner 3 mm. Wenn ein Schweißwerkzeug durch ein faserverstärktes Werkstück mit gerichteten Fasern dringen wollte, so hätte das Schweißwerkzeug diese Fasern zerstört. Aufgrund der beiden aufgeführten Wege wird erreicht, dass die Kunststoffteile miteinander verschweißt werden, ohne dass es zu einem übermäßigen Brechen oder Reißen der Fasern kommt. Ein übermäßiges Brechen oder Reißen der Fasern liegt insbesondere dann vor, wenn innerhalb des Verbindungsbereichs mehr als 50% der Fasern brechen.

Es ergibt sich von dem Verbindungsbereich entlang der Längsrichtung der Verstärkungsfasern bis zu einem Ende des ersten Kunststoffteils eine Erweichungszone und beim Verschweißen werden Fasern aus der Erweichungszone in den Verbindungsbereich gezogen. Das Fasermaterial außerhalb des Verbindungsbereichs in Richtung zu dem benachbarten Ende des Werkstücks, welches bei dem Einsatz des Kunststoffteils keine Belastung erfährt, hat keine funktionale Bedeutung. So ist es vorteilhaft, dass sich das Fasermaterial aus diesem Bereich heraus zieht, um während des Schweißens Zug- und/oder Biege- und/oder Scherbelastungen der Verstärkungsfasern im Verbindungsbereich zu reduzieren.

Es kann in zumindest einem Bereich des ersten Kunststoffteils, der mehr als der Hälfte des Durchmessers des Schweißkopfes von dem Schweißkopf entfernt ist und insbesondere mehr als dem Durchmesser des Schweißkopfes von dem Schweißkopf entfernt ist, das Kunststoffmaterial über eine Wärmequelle auf eine Temperatur zwischen dessen Erweichungs- und Schmelztemperatur oder zumindest auf 5% unterhalb der Erweichungstemperatur erwärmt wird. Der Verbindungsbereich ist bevorzugt der Bereich, in dem der Schweißkopf in das Material eindringt und/oder wo der Formschluss besteht. Bereits unterhalb der Erweichungstemperatur nimmt die Einbettfestigkeit der Verstärkungsfasern in dem Kunststoff ab, so dass eine Positionsveränderung der Verstärkungsfasern möglich ist, ohne dass sie reißen. Bevorzugt wird auf höchstens 5° unterhalb der Schmelztemperatur erwärmt.

Vorzugsweise wird zur Erzielung einer im Schweißbereich benötigten Temperaturerhöhung Energie zugeführt und insbesondere wird an zumindest einem Bereich, der an den Verschweißungsbereich angrenzt und mindestens die Größe des Doppelten des Schweißkopfquerschnitts aufweist, eine Erwärmung durchgeführt, um das erste Kunststoffteil in diesem Bereich in den Erweichungstemperaturbereich zu bringen und dabei bleibt die Temperatur unterhalb der Schmelztemperatur. Die zugeführte Energie ist insbesondere keine kinetische Energie oder nicht ausschließlich kinetische Energie, wie z.B. Reibenergie eines Reibschweißverfahrens. Zusätzlich kann der Schweißkopf rotierend oder oszillierend Energie einbringen.

Es können insbesondere Verstärkungsfasern des ersten Kunststoffteils durch den Schweißkopf abschnittsweise in das zweite Kunststoffteil gedrückt werden. Hierbei wird die Geometrie des zweiten Kunststoffteils vor dem Schweißen betrachtet, in deren Bereich die Verstärkungsfasern des ersten Kunststoffteils gedrückt werden. Hierdurch ergibt sich eine optimale Verankerung des ersten Kunststoffteils im zweiten Kunststoffteil. Sofern auch das zweite Kunststoffteil faserverstärkt ist, ergibt sich aufgrund ihrer großen räumlichen Nähe der Verstärkungsfasern eine gute Verankerung bis hin zu einer Vernetzung der Verstärkungsfasern.

Es kann der Schweißkopf mit einer rotierenden und/oder vibrierenden Bewegung angetrieben werden. Hierdurch wird Wärme in den Verbindungsbereich eingebracht und die Bewegung unterstützt die Verlagerungsbewegung der Verstärkungsfasern, um so dem Schweißkopf auszuweichen, ohne dass die Verstärkungsfasern brechen.

Der Schweißkopf wird in wiederholenden Abständen zumindest teilweise aus dem Material des ersten Kunststoffteils herausgezogen, anschließend um mindestens 0,1 mm oder bevorzugt mindestens 20% des Schweißkopfdurchmessers entlang einer Schweißbahn versetzt und nachfolgend wieder in das Material des ersten Kunststoffteils abgesenkt. So wird sukzessiv eine durchgehende Schweißbahn geschaffen. Die Verstärkungsfasern werden bei einer überlappenden Schweißanordnung zu dem Verbindungspartner ausgelenkt.

Vorteilhafter Weise ist ein Niederhalter umlaufend um den Schweißkopf angeordnet und steht in flächigem Kontakt mit dem ersten Kunststoffteil. Der Niederhalter kann während der Umformung der Verstärkungsfasern relativ zu dem ersten Kunststoffteil ortsfest sein. Der Niederhalter sorgt dafür, dass der Matrixanteil in dem Verbindungsbereich bleibt und sich nicht lokal aufhäuft.

Ein Bauteil umfasst zwei in einem Verbindungsbereich verbundene Kunststoffteile, wobei zumindest ein erstes Kunststoffteil faserverstärkt ist und die Verstärkungsfasern sind weitgehend geradlinig innerhalb des ersten Kunststoffteils ausgerichtet und zumindest ein Teil der Verstärkungsfasern umfasst in dem Verbindungsbereich Ablenkungen, die von der genannten geradlinigen Ausrichtung abweichen. Diese Anordnung ist eine Folge des beschriebenen Fügeverfahrens. Auch können die Fasern in Richtung des verbundenen Fügepartners ausgerichtet bzw. abgelenkt sein.

Auch kann das erste Kunststoffteil einen bestimmten Anteil von langfasrigen Verstärkungsfasern umfassen und bei weniger als 40% dieser Verstärkungsfasern liegt in dem Verbindungsbereich ein Faserbruch vor. Ein komplettes Vermeiden von Faserbrüchen ist ggf. nicht möglich, so dass entsprechend ein hoher Anteil von ungeschädigten Fasern verbleibt, die die Belastungen aufnehmen können.

Im Folgenden werden bevorzugte Ausführungsbeispiele anhand von schematischen Darstellungen näher erläutert. Es zeigen:
- Fig. 1: eine perspektivische Ansicht von zwei Kunststoffbauteile, die zu einem Bauteil verbunden sind,
- Fig. 2: eine seitliche Ansicht auf das in Fig. 1 gezeigte Bauteil,
- Fig. 3: eine Draufsicht auf die zwei Kunststoffbauteile 10,12 des Bauteils nach Fig. 1, wobei ein Schweißkopf 50 angedeutet ist, ohne auch dessen Antriebsvorrichtung 55 zu zeigen,
- Fig. 4: eine seitliche Ansicht in Form eines Teilschnitts durch die Schweißvorrichtung beim Verschweißen und
- Fig. 5: die seitliche Ansicht einer Verschweißung bei zwei Kunststoffteilen, die auf Stoß miteinander verbunden sind.

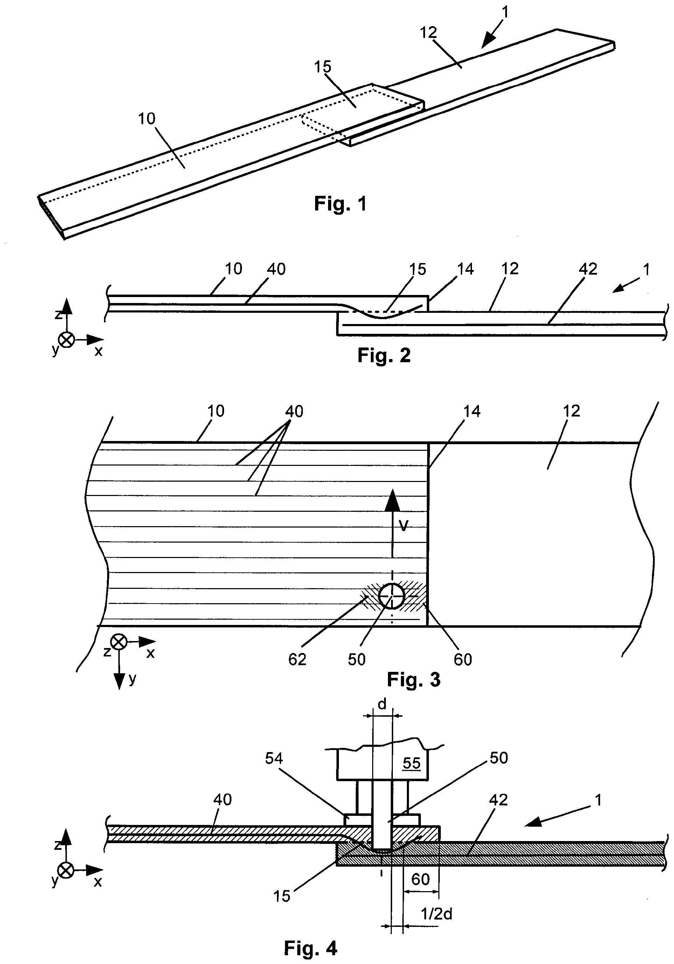

Fig. 1 zeigt zwei Kunststoffteile 10 und 12 eines Bauteils 1. Das Bauteil 1 kann ein in der Luftfahrt eingesetztes Bauteil sein. So kann dies insbesondere eine Klappe, wie eine Landeklappe, eines Flugzeugs sein. Die Bauteile bestehen in der bevorzugten Ausführungsform aus einem Thermoplast und sind beide faserverstärkt. Wie nachfolgend ausgeführt wird, ist es möglich die erfindungsgemäßen Vorteile bereits dann zu erlangen, wenn zumindest eines der Kunststoffteile 10, 12 faserverstärkt ist.

Fig. 2 zeigt einen seitlichen Schnitt durch das Bauteil 1 gemäß Fig. 1. In beiden Kunststoffteilen 10, 12 ist jeweils eine Faserverstärkung 40, 42, die beispielsweise aus Kohlenstoff- oder Glasfasern bestehen kann. Die Darstellung ist schematisch, da bei realen Bauteilen in der Regel keine innere Faserschicht vorliegt, die (so wie es in den Figuren erscheint) beiderseitig von einer faserfreien Kunststoffschicht umgeben ist. Vielmehr haben die Kunststoffteile 10,12 bevorzugt einen hohen Faseranteil, der bspw. bei 50% oder bis zu 80% liegen kann und weitgehend gleichmäßig innerhalb der Kunststoffteile 10,12 verteilt ist. In diesem Sinne sind die nachfolgenden Ausführungen schematisch zu verstehen.

Fig. 2 zeigt, wie in dem verschweißten Bauteil 1 Verstärkungsfasern 40 des ersten Kunststoffteils 10 innerhalb eines Überlappungsbereichs der beiden Kunststoffteile 10,12 in das Kunststoffteil 14 angeordnet sind. Während des Schweißvorgangs wurde von oben, also negativer z-Richtung, ein Schweißkopf 50 in das Material gedrückt und so nach unten eine Verdichtung der Fasern bewirkt und dadurch wurde der Faseranteil in dem unteren Kunststoffteil 12 dadurch erhöht, dass Fasern 40 des ersten Kunststoffteils nach unten verlagert wurden. Dadurch wurde im Gegenzug der Matrix- also der Kunststoffanteil vertikal, also in z-Richtung oberhalb des Verbindungsbereichs 15 erhöht.

Die Verschweißung wird mit Hilfe der Figuren 3 und 4 näher erläutert. Es wird eine Schweißnaht erzeugt, indem der Schweißkopf 50 entlang dem Überlappungsbereich der Kunststoffteile 10,12 in Richtung der Bewegungsrichtung v bewegt wird. Um den Schweißkopf 50 herum ist ein Niederhalter 54 angeordnet, der mit einem definierten Druck von oben, also in negativer z-Richtung auf die Packung der beiden Kunststoffteile 10,12 drückt. Damit wird zunächst bewirkt, dass die Kunststoffteile 10, 12 spaltfrei aufeinander liegen. Zudem ergibt sich aus dem Schweißprozess ein Flüssigkeitsstrom des geschmolzenen Kunststoffs und der Niederhalter 54 bewirkt, dass dieser Kunststoff aus dem Verschweißungsbereich nicht austreten kann.

Bei einer bevorzugten Ausführungsform ist der Schweißkopf rund geformt und wird rotierend angetrieben. Hierdurch wird zunächst kinetische Energie in den Verschweißungsbereich eingebracht, die nach dem Prinzip der Reibschweißung in Wärme umgewandelt wird. Zusätzliche Wärme kann ergänzend eingebracht werden, wie später noch ausgeführt wird. Alternativ kann der Schweißkopf oszillierend in Dickenrichtung (also z-Richtung gemäß Fig. 2) bewegt werden. Hierfür eignet sich ein Piezoantrieb. Hubhöhen von kleiner als 0.1 mm sind vorteilhaft. Andere Oszillationsrichtungen, wie z.B. in der x- oder y-Richtung sind ebenfalls möglich. Auch kann der Schweißkopf andere Querschnittsgeometrien aufweisen, wie z.B. rechteckförmig oder quadratisch,....

Fig. 3 zeigt, dass die Fasern 40 des ersten Kunststoffteils 10 senkrecht zu der Verbindungszone, die der Überlappungsrichtung der beiden Kunststoffteile 10,12 entspricht, liegt. Die Erstreckung der Verbindungszone ist mit dem Pfeil v der Bewegungsrichtung des Schweißkopfs 50 gezeigt. Andere Winkelausrichtungen der Verstärkungsfasern sind ebenfalls möglich. Auch können unterschiedliche bevorzugte Ausrichtungen der Fasern 40 zum Einsatz kommen, wie z.B. eine Vielzahl von Fasern, die z.B. senkrecht zueinander sind und jeweils im 45° Winkel zu der x-Richtung liegen.

Wie bereits erwähnt, drückt der Schweißkopf 50 beim Schweißen in das Kunststoffmaterial. Zusätzlich zu der Erwärmung, die über den Schweißkopf 50 in Form von kinetischer Energie eingebracht werden kann, kann eine zusätzliche Wärmequelle verwendet werden. Sie kann bspw. ein Infrarotstrahler sein oder induktive Methoden, die die Leitfähigkeit der Kunststofffasern ausnutzen. Auch kann der Schweißkopf bspw. elektrisch erwärmt werden. Der Schweißkopf 50 kann derart tief abgesenkt werden, dass sein Ende in das untere, nämlich das zweite Kunststoffteil 12, zumindest leicht eintaucht. Auf diese Art wird die Verschweißung bewirkt. Der Bereich, in dem die stoffschlüssige Verbindung der Verschweißung stattfindet, wird im Folgenden als Verbindungsbereich 15 bezeichnet. Bei herkömmlichen Verschweißungen wird gezielt und bevorzugt ausschließlich dieser Verbindungsbereich 15 erwärmt. Bei dem vorliegenden Verfahren, wird der Kunststoff darüber hinaus erwärmt.

Zum einen kann der Bereich, der gemäß Fig. 3 als die erste Erweichungszone 60 bezeichnet wird, erwärmt werden. Die erste Erweichungszone 60 reicht von dem Verbindungsbereich 15 im Umfeld des Werkzeugs 50 bis zu dem benachbarten Rand, bzw. Ende des Kunststoffs. Dieser Bereich ist beim Einsatz des Bauteils 1 keinen mechanischen Belastungen ausgesetzt, da auf das erste Kunststoffteil 10 ausgeübte Belastungen über den Verbindungsbereich 15, bzw. die Verschweißungszone abgeleitet werden. Bevorzugt wird die erste Erweichungszone 60 bis zu der Erweichungstemperatur erwärmt. Praktisch alle thermoplastischen Kunststoffe haben eine Erweichungstemperatur. Bei dieser Temperatur nimmt die Festigkeit, insbesondere die Zugfestigkeit oder Eindruckfestigkeit deutlich ab, aber die Form bleibt erhalten, da die Schmelztemperatur noch nicht erreicht wurde. Wenn als Matrixmaterial PEEK verwendet wird, so liegt die Erweichungstemperatur bei 305°C und die Schmelztemperatur bei 340°C. Entsprechend wird das Material für das Verschweißen entweder durch die kinetische Energie des Schweißkopfes und/oder zugeführte Wärmeenergie auf die Temperatur von 340°C gebracht. Die erste Erweichungszone 60 wird auf eine Temperatur zwischen 305°C und 330°C gebracht. Alternativ kann die Temperatur auch nur 290°C betragen (oder mehr), da bereits unterhalb der Erweichungstemperatur eine Reduzierung der Festigkeit stattfindet. Der Zweck des Erweichens der ersten Erweichungszone 60 liegt darin, die Verbindungsfestigkeit der Verstärkungsfasern 40 mit dem Matrixmaterial des Kunststoffteils 10 lokal zu reduzieren. Dadurch werden die Verstärkungsfasern 40 bei der Kraftausübung durch den Schweißkopf 50 nicht reißen oder brechen, sondern nach unten ausgelenkt. Hierdurch kann sich die in Fig. 4 gezeigte Durchdrückung der Verstärkungsfasern 40 nach unten, also in Richtung zu dem zweiten Kunststoffteil 12, ergeben. Der Faseranteil in dem Verbindungsbereich 15 beider Kunststoffteile 10,12 wird dadurch erhöht. Überschüssiges Matrixmaterial kann nach oben abgeführt werden. Somit ist der Faseranteil direkt unterhalb des Niederhalters 54 deutlich reduziert. Um die in Fig. 4 gezeigte Umlenkung der Verstärkungsfasern 40 zu ermöglichen, verschieben sich in der Erweichungszone die Fasern teilweise in Richtung des Verbindungsbereich 15. Diese Verschiebung ist u.a. in Fig. 3 zu sehen, da rechts neben dem Schweißkopf 50 die Fasern nicht mehr am Ende des Kunststoffteils (in x-Richtung) anliegen. Bei den noch nicht verschweißten Abschnitten, also in positiver v-Richtung, enden die Enden der Verstärkungsfasern 40 noch an dem Ende 14 des ersten Kunststoffteils 10.

Alternativ und/oder zusätzlich zu der Erwärmung des Kunststoffs in der ersten Erweichungszone 60 kann das Kunststoffmaterial bei der zweiten Erweichungszone 62 erwärmt werden. Die zweite Erweichungszone 62 liegt von dem Verbindungsbereich in der Richtung der Längserstreckung der Verstärkungsfasern und in Richtung weg von dem Ende 14 des ersten Kunststoffteils 10. Diese Erwärmung kann im gleichen Temperaturbereich liegen, wie die genannte Erwärmung der ersten Erweichungszone 60. Wenn diese Erwärmung nicht durchgeführt würde, so könnte es ggf. zu einem steilen Temperaturgefälle kommen. D.h. in einer relativ geringen Entfernung von dem Verbindungsbereich 15 wären dann die Verstärkungsfasern 40 steif in dem Kunststoff eingebettet. Das Eindringen des Schweißkopfes 50 in das Material würde hohe Biege- oder Scherkräfte auf die Verstärkungsfasern 40 bewirken und da die Biegesteifigkeit von z.B. Kohlefasern eher gering ist, würde es zu einem Brechen kommen können. Die genannte Temperaturerhöhung bewirkt, dass die Fasern sich innerhalb des ersten Kunststoffteils umorientieren können, so dass hierdurch die Biege- und/oder Scherbelastung reduziert wird und es zu keinem Faserbruch kommt. Die erste und zweite Erweichungszone muss nicht unmittelbar am Rand des Schweißkopfes 50 beginnen. Vielmehr kann der Bereich, in dem die gezielte Temperatursteuerung vorgesehen ist, also in der ersten und zweiten Erweichungszone 60, 62 mehr als die Hälfte des Durchmessers d des Schweißkopfes 50 von dem Schweißkopf 50 entfernt sein, wie dies in Fig. 4 in Bezug auf die erste Erweichungszone 60 gezeigt ist.

Aufgrund des beschriebenen Verfahrens liegen die genannten Verstärkungsfasern 40 des ersten Kunststoffteils 10 und die Verstärkungsfasern 42 des zweiten Kunststoffteils 12 unmittelbar nebeneinander, so dass sich eine optimale Weiterleitung von den Kräften ergibt, die sich beim Einsatz des Bauteils 1 ergeben können.

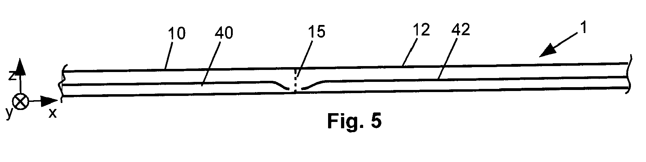

Während vorstehend eine überlappende Verbindung erläutert wurde, zeigt Fig. 5 eine Stumpfstoßanordnung. Zwischen den ersten und zweiten Bauteilen 10, 12 ist gestrichelt deren Verbindungsbereich 15 gezeigt. Bevorzugt exakt entlang dieses Verbindungsbereichs 15 wird der Schweißkopf 50 geführt. Über eine entsprechende Temperaturführung wird bewirkt, dass die Verstärkungsfasern 40, 42 sich innerhalb der Kunststoffteile 10,12 umorientieren können, so dass sich nach dem Schweißen die gezeigte Verbindung mit der entsprechenden Faserausrichtung ergibt.

Die Mantelgeometrie vom Schweißkopf 50 ist bevorzugt eben. Bevorzugt kann die Form zylindrisch sein. Auch kann die Stirnseite der (zylindrischen) Geometrie angespitzt sein. Hierdurch kann unterstützt werden, dass die Fasern sich nicht nur in z-Richtung, also Dickenrichtung, umlagern, sondern auch seitlich, also in der Ebene senkrecht dazu. Bei alternativen Ausführungsformen kann die Form des Schweißkopfs 50 ballig sein, d.h. in einem mittleren Bereich der Mantelfläche kann ein vorstehender Bereich sein. Dieser Bereich umfasst keine scharfen Kanten, sondern vielmehr Rundungen, um möglichst keine Beschädigungen auf die Fasern auszuüben. Der Durchmesser d des Schweißkopfs kann beispielsweise 3 mm sein. Er kann alternativ auch der Dicke des ersten Kunststoffelements 10 entsprechen, wobei er auch im Toleranzfeld von +/- 30% liegen kann. Der Abstand von der mittigen Längsachse des Schweißkopfs bis zum benachbarten Ende 14 des ersten Kunststoffteils liegt bevorzugt im Bereich von dem zweifachen bis zehnfachen des Durchmessers d.

### Bezugszeichen:

- 1: Bauteil
- 10,12: Kunststoffteil
- 14: Ende des ersten Kunststoffteils
- 15: Verbindungsbereich
- 40, 42: Verstärkungsfaser
- 50: Schweißkopf
- 54: Niederhalter
- 55: Antriebsvorrichtung
- 60: erste Erweichungszone
- 62: zweite Erweichungszone

## Patentansprüche

1. Schweißverfahren zur Erzeugung einer stoffschlüssigen Verbindung von einem ersten (10) und einem zweiten (12) Kunststoffteil in einem Verbindungsbereich (15),
wobei zumindest das erste Kunststoffteil (10) mit einer Mehrzahl gerichteter Fasern faserverstärkt ist, und ein Schweißkopf (50) in Kontakt zu dem ersten Kunststoffteil (10) gebracht wird und im Verbindungsbereich (15) eine Erweichung und/oder ein Schmelzen des Kunststoffs bewirkt wird, so dass der Schweißkopf (50) in das erste Kunststoffteil (10) eindringen kann, wobei
der Schweißkopf in wiederholenden Abständen zumindest teilweise aus dem Material des ersten Kunststoffteils (10) herausgezogen wird, anschließend um mindestens 0,1 mm entlang einer Schweißbahn (v) versetzt und nachfolgend wieder in das Material des ersten Kunststoffteils (10) abgesenkt wird,
wobei der Verbindungsbereich (15) benachbart zu einem Ende (14) des ersten Kunststoffteils (10) liegt, dass sich Verstärkungsfasern (40) über eine entsprechende Erwärmung vom genannten Ende (14) in den Verbindungsbereich (15) ziehen können und/oder das benachbart zu dem Verbindungsbereich (15) befindliche Kunststoffmaterial erwärmt wird, dass sich Verstärkungsfasern (40) auch außerhalb (62) des Verbindungsbereichs umorientieren können, um es dem Schweißkopf (50) zu erlauben auch ohne ein generelles Brechen oder Reißen der Verstärkungsfasern (40) in das erste Kunststoffteil (10) einzudringen,
**dadurch gekennzeichnet, dass**
sich von dem Verbindungsbereich (15) entlang der Längsrichtung der Verstärkungsfasern (40) bis zu einem Ende (14) des ersten Kunststoffteils eine Erweichungszone (60) ergibt und beim Verschweißen Fasern aus der Erweichungszone in den Verbindungsbereich gezogen werden.

2. Schweißverfahren gemäß Anspruch 1, **dadurch gekennzeichnet, dass** in zumindest einem Bereich (60,62) des ersten Kunststoffteils (10), der mehr als der Hälfte des Durchmessers (d) des Schweißkopfes (50) von dem Schweißkopf (50) entfernt ist und insbesondere mehr als dem Durchmesser (d) des Schweißkopfes (50) von dem Schweißkopf (50) entfernt ist, das Kunststoffmaterial über eine Wärmequelle auf eine Temperatur zwischen dessen Erweichungs- und Schmelztemperatur oder zumindest auf 5% unterhalb der Erweichungstemperatur erwärmt wird.

3. Schweißverfahren gemäß einem der vorangegangenen Ansprüche, **dadurch gekennzeichnet, dass** zur Erzielung einer im Schweißbereich benötigten Temperaturerhöhung Energie zugeführt wird und insbesondere an zumindest einem Bereich (60,62), der an den Verschweißungsbereich angrenzt und mindestens die Größe des Doppelten des Schweißkopfquerschnitts aufweist, eine Erwärmung durchgeführt wird, um das erste Kunststoffteil (10) in diesem Bereich (60,62) in den Erweichungstemperaturbereich zu bringen und dabei unterhalb der Schmelztemperatur bleibt.

4. Schweißverfahren gemäß einem der vorangegangenen Ansprüche, **dadurch gekennzeichnet, dass** Verstärkungsfasern (40) des ersten Kunststoffteils (10) durch den Schweißkopf (50) abschnittsweise in das zweite Kunststoffteil (12) gedrückt werden.

5. Schweißverfahren gemäß einem der vorangegangenen Ansprüche, **dadurch gekennzeichnet, dass** der Schweißkopf (50) mit einer rotierenden und/oder vibrierenden Bewegung angetrieben wird.

6. Schweißverfahren gemäß einem der vorangegangenen Ansprüche, **dadurch gekennzeichnet, dass** der Schweißkopf in wiederholenden Abständen zumindest teilweise aus dem Material des ersten Kunststoffteils (10) herausgezogen wird, anschließend um mindestens 20% des Schweißkopfdurchmessers entlang einer Schweißbahn (v) versetzt und nachfolgend wieder in das Material des ersten Kunststoffteils (10) abgesenkt wird.

7. Schweißverfahren gemäß einem der vorangegangenen Ansprüche, **dadurch gekennzeichnet, dass** ein Niederhalter (54)umlaufend um den Schweißkopf (50) angeordnet ist und in flächigem Kontakt mit dem ersten Kunststoffteil (10) steht und insbesondere während der Umformung der Verstärkungsfasern (40) relativ zu dem ersten Kunststoffteil (10) ortsfest angeordnet ist.

## Claims

1. Welding method for creating a materially bonded connection between a first plastics part (10) and a second plastics part (12) in a connection region (15), wherein at least the first plastics part (10) is fibre-reinforced with a plurality of oriented fibres, and a welding head (50) is brought into contact with the first plastics part (10) and the plastic is softened and/or melted in the connection region (15), with the result that the welding head (50) can penetrate into the first plastics part (10),
wherein
the welding head is at least partially drawn out of the material of the first plastics part (10) at repeating spacings, is subsequently offset by at least 0.1 mm along a welding track (v) and is then lowered into the material of the first plastics part (10) again,
wherein the connection region (15) is adjacent to an end (14) of the first plastics part (10), in that reinforcing fibres (40) can be drawn into the connection region (15) by corresponding heating of the end (14) mentioned and/or the plastics material located adjacent to the connection region (15) is heated, in that reinforcing fibres (40) can realign also outside (62) the connection region, in order to allow the welding head (50) to penetrate into the first plastics part (10) even without generally breaking or tearing the reinforcing fibres (40),
**characterized in that**
a softening zone (60) is produced from the connection region (15) along the longitudinal direction of the reinforcing fibres (40) up to an end (14) of the first plastics part, and fibres are drawn out of the softening zone into the connection region during the welding.

2. Welding method according to Claim 1, **characterized in that** the plastics material is heated by a heat source to a temperature between its softening and melting temperature or at least to 5% below the softening temperature in at least one region (60, 62) of the first plastics part (10) which is remote from the welding head (50) by more than half the diameter (d) of the welding head (50) and in particular is remote from the welding head (50) by more than the diameter (d) of the welding head (50).

3. Welding method according to either of the preceding claims, **characterized in that**, to obtain a temperature increase required in the welding region, energy is supplied and heating is carried out in particular at least at a region (60, 62) which adjoins the welding region and is at least twice the size of the cross section of the welding head, in order to bring the first plastics part (10) in this region (60, 62) into the softening temperature range, in the process said plastics part remaining below the melting temperature.

4. Welding method according to one of the preceding claims, **characterized in that** reinforcing fibres (40) of the first plastics part (10) are pressed into certain portions of the second plastics part (12) by the welding head (50).

5. Welding method according to one of the preceding claims, **characterized in that** the welding head (50) is driven with a rotating and/or vibrating movement.

6. Welding method according to one of the preceding claims, **characterized in that** the welding head is at least partially drawn out of the material of the first plastics part (10) at repeating spacings, is subsequently offset by at least 20% of the diameter of the welding head along a welding track (v) and is then lowered into the material of the first plastics part (10) again.

7. Welding method according to one of the preceding claims, **characterized in that** a hold-down device (54) is arranged around the circumference of the welding head (50) and is in planar contact with the first plastics part (10) and in particular is arranged in a positionally fixed manner relative to the first plastics part (10) during the forming of the reinforcing fibres (40).

## Revendications

1. Procédé de soudage pour la génération d'une liaison par accouplement de matière d'une première (10) et d'une deuxième (12) pièce en plastique dans une zone de liaison (15), au moins la première pièce en plastique (10) étant renforcée par des fibres avec une pluralité de fibres orientées, et une tête de soudage (50) étant mise en contact avec la première pièce en plastique (10) et un ramollissement et/ou une fusion du plastique étant effectués dans la zone de liaison (15), de telle sorte que la tête de soudage (50) puisse pénétrer dans la première pièce en plastique (10),
la tête de soudage étant retirée au moins partiellement de la matière de la première pièce en plastique (10) à intervalles répétés, puis étant décalée d'au moins 0,1 mm le long d'une bande de soudage (v) et étant ensuite de nouveau abaissée dans la matière de la première pièce en plastique (10),
la zone de liaison (15) étant voisine d'une extrémité (14) de la première pièce en plastique (10), en ce que des fibres de renforcement (40) puissent s'étirer par l'intermédiaire d'un réchauffement approprié depuis l'extrémité mentionnée (14) dans la zone de liaison (15), et/ou la matière plastique voisine de la zone de liaison (15) étant chauffée, en ce que des fibres de renforcement (40) puissent également se réorienter à l'extérieur (62) de la zone de liaison, afin de permettre à la tête de soudage (50) de pénétrer dans la première pièce en plastique (10) sans rupture ou déchirure générale des fibres de renforcement (40),
**caractérisé en ce que**
une zone de ramollissement (60) est produite depuis la zone de liaison (15) le long de la direction longitudinale des fibres de renforcement (40) jusqu'à une extrémité (14) de la première pièce en plastique et, lors du soudage, des fibres sont étirées depuis la zone de ramollissement dans la zone de liaison.

2. Procédé de soudage selon la revendication 1, **caractérisé en ce que**, dans au moins une zone (60, 62) de la première pièce en plastique (10), qui est éloignée de la tête de soudage (50) de plus de la moitié du diamètre (d) de la tête de soudage (50) et notamment qui est éloignée de la tête de soudage (50) de plus du diamètre (d) de la tête de soudage (50), la matière plastique est chauffée par l'intermédiaire d'une source de chaleur à une température comprise entre sa température de ramollissement et de fusion ou au moins à 5 % en dessous de la température de ramollissement.

3. Procédé de soudage selon l'une quelconque des revendications précédentes, **caractérisé en ce que**, pour l'obtention d'une élévation de température nécessaire dans la zone de soudage, de l'énergie est apportée, et, notamment au niveau d'au moins une zone (60, 62), qui est adjacente à la zone de soudage et présente au moins la taille du double de la section transversale de la tête de soudage, un chauffage est réalisé afin de porter la première pièce en plastique (10) dans cette zone (60, 62) dans la plage de température de ramollissement et de rester en dessous de la température de fusion.

4. Procédé de soudage selon l'une quelconque des revendications précédentes, **caractérisé en ce que** des fibres de renforcement (40) de la première pièce en plastique (10) sont pressées par la tête de soudage (50) en sections dans la deuxième pièce en plastique (12) .

5. Procédé de soudage selon l'une quelconque des revendications précédentes, **caractérisé en ce que** la tête de soudage (50) est entraînée avec un mouvement de rotation et/ou de vibration.

6. Procédé de soudage selon l'une quelconque des revendications précédentes, **caractérisé en ce que** la tête de soudage est retirée au moins partiellement de la matière de la première pièce en plastique (10) à intervalles répétés, puis est décalée d'au moins 20 % du diamètre de la tête de soudage le long d'une bande de soudage (v) et est ensuite de nouveau abaissée dans la matière de la première pièce en plastique (10).

7. Procédé de soudage selon l'une quelconque des revendications précédentes, **caractérisé en ce qu'**un serre-flanc (54) est agencé circonférentiellement autour de la tête de soudage (50) et se trouve en contact surfacique avec la première pièce en plastique (10) et est notamment agencé de manière fixe par rapport à la première pièce en plastique (10) pendant la déformation des fibres de renforcement (40).
